# EUROPEAN PATENT SPECIFICATION

(11) **EP 1 137 372 B1**
(45) Date of publication and mention of the grant of the patent: **21.06.2006**
(21) Application number: 99973251.4
(22) Date of filing: 15.11.1999
(51) Int. Cl.: A61C 3/00, A61C 13/00

(54) **A DEVICE FOR USE PARTICULARLY IN THE REINFORCEMENT OF TEETH OR DENTAL PROSTHETIC DEVICES**
EINE VORRICHTUNG ZUR VERWENDUNG INSBESONDERE DER VERSTÄRKUNG VON ZÄHNEN ODER DENTALEN PROTHESEVORRICHTUNGEN
DISPOSITIF CONCU SPECIALEMENT POUR RENFORCER LES DENTS OU LES PROTHESES DENTAIRES

(30) Priority: 07.12.1998 FI 982632; 16.12.1998 US 212268
(43) Date of publication of application: 04.10.2001
(73) Proprietor: Stick Tech OY, 20521 Turku (FI)
(72) Inventor: KANGASNIEMI, Ilkka, 20760 Piispanristi (FI)
(74) Representative: Heikkilä, Hannes Antero
(86) International application number: PCT/FI1999/000943
(87) International publication number: WO 2000/033758

(56) References cited:
- EP-A- 0 608 598
- EP-A1- 0 164 481
- WO-A1-89/04640
- WO-A1-96/25911
- US-A- 3 519 364
- US-B- 3 537 180
- US-B- 4 997 371

## Description

This invention relates to a system as defined in the preamble of claim 1.

The invention also relates to the use of said system and to a method of wetting of a reinforcing fiber bundle.

Fiber products are generally used in dentistry for splinting and reinforcing of teeth and for reinforcing of various dental prosthetic devices such as crowns, fixed bridges, removable dentures and so called surface attachable bridges or light or maryland type bridges. Such fiber reinforcement products either solely consist of fibers, or they are fiber reinforcement products preimpregnated with a polymer or a monomer. Commercially available products of this kind are listed in the following table 1.

**Table 1**

| **Type of fiber** | **Product (brand)** | **Preimpregnation** |
|---|---|---|
| UHMWP^{x)} | Ribbond, DVA Fibers Connect, Fibre-Bind | none |
| | Fibrespan | monomer |
| Aramide | Kevlar | none |
| Glass | GlassSpan, Fiber Splint | none |
| | Vectris, FibreKor | monomer |
| | Stick, Stick Net | polymer |

| | | |
|---|---|---|
| x) UHMWP = ultra high molecular weight polyethylene | | |

In the UHMWP products, there is no attachment between the fibers and the polymer, the impregnation of the fibers is poor and the products result in an increase of fatigue strength of only about 25 %.

In aramide fiber products the fibers do not either attach very well to the polymer and the impregnation of the fibers is poor.

In glass fiber products without preimpregnation by a polymer matrix, the impregnation of the fibers is poor and their strengths are poor.

The preimpregnated glass fiber products are expensive, but they result in a good strength. The international patent publication WO 96/25911 discloses such a porous prepreg based on glass fibers, wherein said prepreg is preimpregnated with a polymer.

The commercially available fiber reinforcement products are usually in woven form or in the form of a fiber bundle where the fibers are unidirectional. The handling of woven fiber products is rather easy. When such products are cut e.g. with scissors, the fiber bundles are fairly well kept together and they do not fray remarkably. The handling of non woven fiber bundles of unidirectional fibers is remarkably more difficult. When these products are cut, the individual fibers are not kept together by anything, and the fiber bundle may freely fall apart. This problem has been attempted to solve by tying the bundle together with an additional thread, by weaving the bundle or by preimpregnating the bundle with a porous polymer matrix. These solutions imply new problems. If the bundle is tied together with a thread or is woven, the fibers stay tightly together. This complicates the impregnation of the fiber bundle because the monomer liquid cannot easily penetrate in between the individual fibers. Another problem is that if the bundle is tightly tied or woven together, the fibers of the fiber bundle cannot be spread any longer.

Fiber bundles impregnated with a polymer are easy to cut and they impregnate well with the monomer because of the existing polymer matrix between the fibers. Once impregnated with the monomer, the polymer matrix begins to dissolve into the monomer and the individual fibers begin to loosen from the bundle. As a result, the fiber bundle is difficult to handle on the mould or in the mouth because the fiber bundle is no longer well bound together. Secondly, a problem common to all types of glass fiber bundles is that the high tensile modulus of glass fibers forces the bundle to straigthen up. Therefore it is very difficult to apply the bundle onto curvy tooth arches.

In summary, the aim is that the fibers either can be kept together or spread, if desired. Furthermore, it is desirable that the fiber bundle can be formed to follow the shape of the tooth arch closely while keeping the control of the fibre bundle continuously. In addition, it is desirable that the wetting of the fiber bundle and the handling and storage thereof is safe because of the repeated skin contamination and the allergenic properties of the evaporating monomer. Moreover, it is desirable that the wetted fiber bundle, which at a later stage is cured with light (blue light), is not cured by room light or by the curing light from the light curing apparatus before the wetted fiber bundle is applied on the intended place.

Document EP 608 598 discloses an adjustable brush delivery tip with secondary flow path, useful for applying coatings to various surface types. The apparatus includes a reservoir for holding a quantity of the coating material and a delivery tip having adjustable bristles at one end.

The above object is achieved by a device in accordance with the invention, which is characterized by what is disclosed in the characterizing parts of the appended independent claims.

Thus, the object of the invention is a system comprising a pipe having a first end and a second end, a wall that is treated so as to not essentially pass blue light and a nozzle arranged at the second end, the cross-section of the nozzle being smaller than the cross-section of the pipe. The system is characterized in that it further comprises a reinforcing fiber bundle.

Another object of the invention is the use of a system according to the present invention for wetting and for application of a reinforcing fiber bundle on its place in laboratory.

A yet further object of the invention is a method of wetting of a reinforcing fiber bundle, the method being characterized in that said fiber bundle is inserted to a pipe through its first end and wetting liquid for dissolving the polymer mass of the reinforcing fiber bundle is added, said pipe having a wall that is treated so as to not essentially pass blue light and a nozzle arranged at the second end of said pipe, the cross-section of the nozzle being smaller than the cross-section of the pipe.

The invention is described in more detail by refering to the attached drawings where
Figure 1 shows part of the system according to the invention according to a preferred embodiment,
Figure 2 shows the tip of the system according to Figure 1, and
Figure 3 shows a protecting cap for the nozzle of the system according to Figure 1.

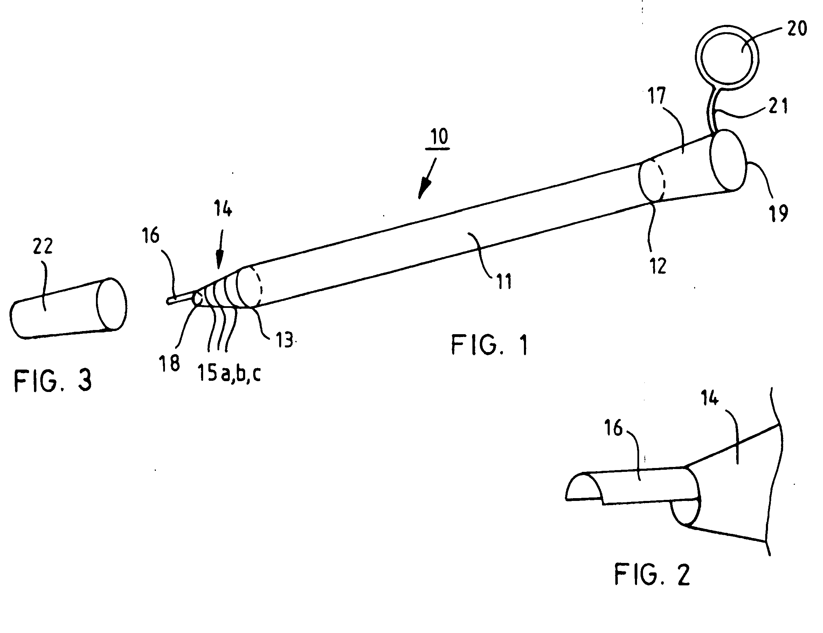

Figure 1 shows part of the system 10 according to the invention in a preferred embodiment. The system comprises a pipe 11, made of a flexible material, through the first end 12 of which the reinforcing fiber bundle (not shown in the figure) can be inserted into the pipe. Through the second end 13 of the pipe the reinforcing fiber bundle is removed, i.e. applied onto its place. The lenght of the pipe preferably long enough to allow the longest reinforcing fiber bundle to be straight therein. In practice, such a longest reinforcing fiber bundle will correspond to the length of the tooth arch, i.e. about 15 cm. The cross-section of the pipe must be so large that at least one reinforcing fiber bundle and the liquid necessary for its wetting without difficulty fit into the pipe. According to a preferred embodiment, the cross-section of the pipe is large enough (i.e. the diameter is about 4 mm) to allow the pipe to contain several reinforcing fiber bundles simultaneously side by side, so that they can be wetted simultaneously. When the reinforcing fiber bundle (or bundles) is inserted into the pipe, the wetting liquid (monomer liquid) dissolving the polymer mass of the reinforcing fiber bundle, is added. The softened reinforcing fiber bundle is cured, for example, with blue light (wave length about 400 nm) after the reinforcing fiber bundle has been removed from the device 10 and applied onto its final place. Because the pipe is manufactured of a flexible material, suitably of plastic, which is inert in relation to the wetting liquid (i.e. the wetting liquid does not react with it, does not adhere to or penetrate it) the distribution of the wetting liquid to the reinforcing fiber bundle can be enhanced by pressing the wall of the pipe. It is essential that the wall of the pipe is treated so as to not essentially pass the light intended for the curing of the reinforcing fiber bundle. This can be suitably arranged by using orange coloured plastic, because the orange colour absorbs blue light. Alternatively, black colour could be used, but orange colour is preferred because it allows the pipe to be transparent.

A nozzle 14 is arranged at the second end 13 of the pipe, wherein the cross-section of the nozzle is smaller than the cross-section of the pipe 11. Due to this feature, the reinforcing fiber bundle is kept well together when leaving the device. According to a preferred arrangement, the nozzle 14 is shaped as shown in figure 1, i.e. it is a conically shaped piece tapering in the running direction of the fibers. The diameter of the discharge outlet 18 of the nozzle 14 is preferably about 1.5 mm. The conically shaped nozzle 14 may be equipped with one or more cutting lines 15a, 15b, 15c... for fiber reinforcement bundles of various thicknesses. When thicker fiber bundles are used, the conically shaped nozzle can be cut at the desired point. The cutting lines 15a, 15b, 15c... can be marked with the inner diameter of the discharge outlet (e.g. 2, 2.5 and 3 mm) which helps the user to cut the nozzle at the appropriate point.

The nozzle is preferably manufactured of a stiff material.

In the arrangement according to figure 1, the end 13 of the pipe in contact with the nozzle 14 may also be made of a stiffer material than the main part of the pipe.

The system is preferable equipped with a tip 16 made of a stiff material. This tip 16 may be connected to the pipe 11 itself, or, as shown in figure 1, connected to the nozzle 14. When part of the wetted fiber bundle is drawn (or pushed with a plunger) out of the nozzle 14 and applied on its final place, the reinforcing fiber bundle can be firmly pressed by the tip 16 against the tooth or dental prosthetic device for the time of curing. Thanks to the tip 16, it is not necessary to use other dental instruments in order to stick the reinforcing fiber bundle to its place.

Figure 2 shows more closely a preferable embodiment of the tip 16. The tip is a bent piece, the form of which best corresponds to a certain segment of a pipe. The tip is placed so that its concave surface becomes directed against the reinforcing fiber bundle. The concave surface keeps the individual fibers of the reinforcing fiber bundle firmly together and prevents their fraying. The width of the tip is suitably about 1 mm.

Furthermore, the system is suitably provided with a feeding nozzle 17 connected to the first end 12 of the pipe. According to the embodiment shown in figure 1, the feeding nozzle is a conically shaped piece tapering in the running direction of the fibers. The diameter of inlet opening 19 of the feeding nozzle is preferable about 6 mm. The conical shape facilitates the inlet of the wetting liquid into the pipe.

The feeding nozzle 17 according to figure 1 is provided with a cover 20, which via a strip 21 is connected to the system. Figure 3 shows a separate protecting cap 22 used to protect the nozzle 14 and the tip 16.

The system can also comprise a plunger, going inside the pipe, with which the reinforcing fiber bundle can be pushed out from the device.

It shall be noted that it is not necessary that the cross-section of the pipe is circle-formed. Thus, it can for example be oval or otherwise different from a circle.

The system according to the invention can be used for application of any reinforcing fiber bundle onto the tooth or to the dental prosthetic device. The reinforcing fiber bundle can thus be impregnated or non-impregnated. The curing of the reinforcing fiber bundle can be carried out with light or chemically. The light curing is preferable because it enables selective curing of the part of the reinforcing fiber bundle removed from the system. The system is particularly useful for the application of a glass fiber based reinforcing fiber bundle.

The system can be used clinically for splinting of teeth, in the manufacture of orthodontic devices and in the manufacture of prosthetic bridges, both in the patient's mouth and in laboratory. In laboratory, the system can be used for the manufacture of many different kinds of prostheses.

Furthermore, the system can be used generally in the medical and surgical field, for example for reinforcement of different orthopedic prostheses by a reinforcing fiber bundle.

## Claims

1. A system comprising a flexible pipe (11) having a first end (12) and a second end (13), a wall that is treated so as to not essentially pass blue light and a nozzle (14) arranged at the second end (13), the cross-section of the nozzle (14) being smaller than the cross-section of the pipe (11), **characterized in that** it further comprises a straight reinforcing fiber bundle.

2. The system according to claim 1, **characterized in that** it also comprises a wetting liquid for dissolving the polymer mass of the reinforcing fiber bundle.

3. The system according to claim 1 or 2, **characterized in that** the nozzle (14) is a conically shaped piece tapering in the running direction of the fibers.

4. The system according to claim 3, **characterized in that** the conically shaped piece is equipped with one or more cutting lines (15a, 15b, 15c...) for fiber reinforcement bundles of various thicknesses,

5. The system according to any of the claims 1-4, **characterized in that** the nozzle is manufactured of a stiff material.

6. The system according to any of the foregoing claims, **characterized in that** the system is equipped with a tip (16), arranged in connection with the nozzle (14) or the pipe (11) and manufactured of a stiff material.

7. The system according to claim 6, **characterized in that** the tip (16) is a bent piece having its concave surface directed against the reinforcing fiber bundle.

8. The system according to any of the foregoing claims, **characterized in that** to the first end (12) of the pipe is attached a feeding nozzle (17), which preferably is a conically shaped piece tapering in the running direction of the fibers.

9. The system according to any of the foregoing claims, **characterized in that** it also comprises a plunger, going inside the pipe, with which the reinforcing fiber bundle can be pushed out from the device.

10. The system according to any of the claims 2-9, **characterized in that** the pipe is manufactured of a suitable plastic material which is inert in relation to the liquid for the wetting of the reinforcing fiber bundle.

11. The system according to any of the foregoing claims, **characterized in that** the pipe is orange coloured.

12. The system according to any of the foregoing claims, **characterized in that** the cross-section of the pipe is so large that several reinforcing fiber bundles simultaneously go into the pipe side by side.

13. Use of a system according to any of the claims 1-12 for wetting and for application of a reinforcing fiber bundle on its place in laboratory.

14. A method of wetting of a reinforcing fiber bundle, **characterized in that** said fiber bundle is inserted to a pipe through its first end and wetting liquid for dissolving the polymer mass of the reinforcing fiber bundle is added, said pipe having a wall that is treated so as to not essentially pass blue light and a nozzle arranged at the second end of said pipe, the cross-section of the nozzle being smaller than the cross-section of the pipe.

## Patentansprüche

1. System umfassend ein flexibles Rohr (11), welches ein erstes Ende (12) und ein zweites Ende (13), eine derart behandelte Wand, dass im Wesentlichen kein blaues Licht hindurchtritt, und eine an dem zweiten Ende (13) angeordnete Düse (14) besitzt, wobei der Querschnitt der Düse (14) kleiner als der Querschnitt des Rohrs (11) ist, **dadurch gekennzeichnet, dass** es weiterhin ein geradliniges verstärkendes Faserbündel umfasst.

2. System nach Anspruch 1, **dadurch gekennzeichnet, dass** es auch eine befeuchtende Flüssigkeit zum Auflösen der Polymermasse des verstärkten Faserbündels umfasst.

3. System nach Anspruch 1 oder 2, **dadurch gekennzeichnet, dass** die Düse (14) ein konisch geformtes Stück ist, welches sich in der Laufrichtung der Fasern verjüngt.

4. System nach Anspruch 3, **dadurch gekennzeichnet, dass** das konisch geformte Stück mit einer oder mehreren Schnittlinien (15a, 15b, 15c...) für faserverstärkte Bündel verschiedener Dicken ausgestattet ist.

5. System nach einem der Ansprüche 1-4, **dadurch gekennzeichnet, dass** die Düse aus starrem Material hergestellt ist.

6. System nach einem der vorangegangenen Ansprüche, **dadurch gekennzeichnet, dass** das System mit einer Spitze (16) ausgestattet ist, welche in Verbindung mit der Düse (14) oder dem Rohr (11) angeordnet ist und aus starrem Material hergestellt ist.

7. System nach Anspruch 6, **dadurch gekennzeichnet, dass** die Spitze (16) ein gebogenes Stück ist, welches eine entgegen des verstärkenden Glasfaserbündels gerichtete konkave Oberfläche besitzt.

8. System nach einem der vorangegangenen Ansprüche, **dadurch gekennzeichnet, dass** an das erste Ende (12) des Rohrs eine Zuführungsdüse (17) angebracht ist, welche vorzugsweise ein konisch geformtes Stück ist, welches sich in der Laufrichtung der Fasern verjüngt.

9. System nach einem der vorangegangenen Ansprüche, **dadurch gekennzeichnet, dass** es auch einen in das Rohr hineinpassenden Druckkolben umfasst, mit welchem das verstärkende Faserbündel aus der Vorrichtung herausgedrückt werden kann.

10. System nach einem der Ansprüche 2-9, **dadurch gekennzeichnet, dass** das Rohr aus einem geeigneten Kunststoffmaterial hergestellt ist, welches im Verhältnis zu der Flüssigkeit zum Befeuchten des verstärkenden Faserbündels träge ist.

11. System nach einem der vorangegangenen Ansprüche, **dadurch gekennzeichnet, dass** das Rohr orange gefärbt ist.

12. System nach einem der vorangegangenen Ansprüche, **dadurch gekennzeichnet, dass** der Querschnitt des Rohrs so groß ist, dass verschiedene verstärkende Faserbündel gleichzeitig nebeneinander in das Rohr hineinpassen.

13. Verwendung eines Systems nach einem der Ansprüche 1-12 zum Befeuchten und zur Anwendung eines verstärkenden Faserbündels vor Ort im Labor.

14. Verfahren zum Befeuchten eines verstärkenden Faserbündels, **dadurch gekennzeichnet, dass** das Faserbündel durch sein erstes Ende in ein Rohr eingeführt wird, und eine befeuchtende Flüssigkeit zum Auflösen der Polymermasse des verstärkenden Faserbündels hinzugefügt wird, wobei das Rohr eine derart behandelte Wand, dass im Wesentlichen kein blaues Licht hindurchdringt, und eine am zweiten Ende des Rohrs angeordnete Düse besitzt, wobei der Querschnitt der Düse kleiner als der Querschnitt des Rohrs ist.

## Revendications

1. Système comprenant un tuyau souple (11) comportant une première extrémité (12) et une seconde extrémité (13), une paroi qui est traitée de façon à ne pas laisser passer essentiellement la lumière bleue et une buse(14) disposée au niveau de la seconde extrémité (13), la section transversale de la buse (14) étant plus petite que la section transversale du tuyau (11), **caractérisé en ce qu'**il comprend, de plus, un faisceau de fibres de renforcement droit.

2. Système selon la revendication 1, **caractérisé en ce qu'**il comprend également un liquide mouillant servant à dissoudre la masse de polymère du faisceau de fibres de renforcement.

3. Système selon la revendication 1 ou 2, **caractérisé en ce que** la buse (14) est une pièce configurée de façon conique s'effilant dans la direction de circulation des fibres.

4. Système selon la revendication 3, **caractérisé en ce que** la pièce configurée de façon conique est pourvue d'une ou de plusieurs ligne(s) de coupe (15a, 15b, 15c...) pour des faisceaux de fibres de renforcement de différentes épaisseurs.

5. Système selon l'une quelconque des revendications 1 à 4, **caractérisé en ce que** la buse est fabriquée en un matériau rigide.

6. Système selon l'une quelconque des revendications précédentes, **caractérisé en ce que** le système est pourvu d'une pointe (16) disposée en liaison avec la buse (14) ou le tuyau (11) et fabriquée en un matériau rigide.

7. Système selon la revendication 6, **caractérisé en ce que** la pointe (16) est une pièce recourbée présentant sa surface concave dirigée contre le faisceau de fibres de renforcement.

8. Système selon l'une quelconque des revendications précédentes, **caractérisé en ce qu'**à la première extrémité (12) du tuyau est fixée une buse d'alimentation (17), laquelle est, de préférence, une pièce configurée de façon conique s'effilant dans la direction de circulation des fibres.

9. Système selon l'une quelconque des revendications précédentes, **caractérisé en ce qu'**il comprend également un piston, plongeant à l'intérieur du tuyau, avec lequel le faisceau de fibre de renforcement peut être repoussé hors du dispositif.

10. Système selon l'une quelconque des revendications 2 à 9, **caractérisé en ce que** le tuyau est fabriqué d'un matériau plastique approprié qui est inerte par rapport au liquide servant à mouiller le faisceau de fibres de renforcement.

11. Système selon l'une quelconque des revendications précédentes, **caractérisé en ce que** le tuyau est de couleur orange.

12. Système selon l'une quelconque des revendications précédentes, **caractérisé en ce que** la section transversale du tuyau est si grande que plusieurs faisceaux de fibres de renforcement sont introduits simultanément dans le tuyau côte à côte.

13. Utilisation d'un système selon l'une quelconque des revendications 1 à 12 destiné au mouillage et à une application d'un faisceau de fibres de renforcement sur sa place au laboratoire.

14. Procédé de mouillage d'un faisceau de fibres de renforcement, **caractérisé en ce que** ledit faisceau de fibres est inséré dans un tuyau à travers sa première extrémité et un liquide mouillant servant à dissoudre la masse de polymère du faisceau de fibres de renforcement est ajouté, ledit tuyau comportant une paroi qui est traitée de façon à ne pas laisser passer essentiellement une lumière bleue et une buse disposée au niveau de la seconde extrémité dudit tuyau, la section transversale de la buse étant plus petite que la section transversale du tuyau.
